**Europäisches Patentamt**

**European Patent Office**

**Office européen des brevets**

(19)

(11) Veröffentlichungsnummer : **0 433 579 B1**

(12) ## EUROPÄISCHE PATENTSCHRIFT

(45) Veröffentlichungstag der Patentschrift :
**09.12.92 Patentblatt 92/50**

(51) Int. Cl.$^5$ : **C10J 3/84, C10J 3/46**

(21) Anmeldenummer : **90118772.4**

(22) Anmeldetag : **29.09.90**

(54) **Verfahren und Vorrichtung zur Kühlung von Partialoxidationsrohgas.**

(30) Priorität : **17.11.89 DE 3938223**

(43) Veröffentlichungstag der Anmeldung :
**26.06.91 Patentblatt 91/26**

(45) Bekanntmachung des Hinweises auf die
Patenterteilung :
**09.12.92 Patentblatt 92/50**

(84) Benannte Vertragsstaaten :
**DE DK ES GB NL**

(56) Entgegenhaltungen :
**EP-A- 0 284 762**
**DE-A- 3 601 786**
**DE-A- 3 809 313**
**FR-A- 2 274 884**

(73) Patentinhaber : **Krupp Koppers GmbH**
**Altendorfer Strasse 120**
**W-4300 Essen 1 (DE)**

(72) Erfinder : **Richard, Hans-Günter, Dr.**
**Im Diepental 24**
**W-4000 Düsseldorf-Benrath (DE)**
Erfinder : **Wilmer, Gerhard**
**Am Pastoratsweg 27**
**W-4320 Hattingen (DE)**
Erfinder : **Niermann, Hans**
**Wickenburgstrasse 58**
**W-4300 Essen 1 (DE)**

# Beschreibung

Die Erfindung betrifft ein Verfahren und eine Vorrichtung zur Kühlung von Partialoxidationsrohgas, das durch Vergasung (Partialoxidation) von feinkörnigen bis staubförmigen Brennstoffen in einem Flugstromvergaser in Gegenwart von Sauerstoff und/oder Luft sowie Wasserdampf bei Drücken bis zu 100 bar und Temperaturen oberhalb des Schlackeschmelzpunktes gewonnen wird, wobei das zu kühlende Gas mit einem gas- bzw. dampfförmigen Kühlfluid gequencht wird

Bei der Vergasung von feinkörnigen bis staubförmigen Brennstoffen unter den vorstehend skizzierten Bedingungen liegen die Vergasungstemperaturen im Bereich von ca. 1700°C bis ca. 2000°C. Während das erzeugte Partialoxidationsrohgas den sogenannten Rohgaskanal, der aus dem oberhalb der Brennerebene befindlichen Reaktorschacht des Vergasungsreaktors sowie dem sich unmittelbar daran anschließenden Strahlungskühler besteht, durchströmt, kühlt es sich durch chemische Reaktionen sowie durch Wärmeabgabe an die gekühlten Wände des Rohgaskanals ab. Je nach Bauart und Bauhöhe des Vergasungsreaktors sowie des Strahlungskühlers stellen sich hierbei Endtemperaturen des Partialoxidationsrohrgases zwischen 800°C und 1600°C ein. Hinter dem Rohgaskanal wird das Gas normalerweise in einen Konvektionskühler oder einen kombinierten Kühler-Wärmeaustauscher eingeleitet, in dem seine weitere Abkühlung erfolgt. Derartige Einrichtungen weisen jedoch stets Einbauten auf, an denen sich infolge der weiter absinkenden Gastemperatur aus dem Rohgasstrom abscheidende klebrige bzw. schmelzflüssige Asche- bzw. Schlackepartikel niederschlagen können. Hierdurch besteht aber die Gefahr, daß es auf der Oberfläche der Einbauten zu unerwünschten Anbackungen bzw. Ablagerungen kommt, durch die der ungehinderte Gasdurchsatz beeinträchtigt oder unter Umständen vollständig verhindert wird. Daher ist es in der Praxis unerläßlich, den Rohgasstrom vor dem Eintritt in die genannten, Einbauten aufweisenden Einrichtungen soweit abzukühlen, daß die Abscheidung von Asche- bzw. Schlackepartikeln auf den Einbauten vermieden wird.

Zu diesem Zweck ist es bereits bekannt, den heißen Rohgasstrom vor dem Eintritt in die Einbauten aufweisenden Einrichtungen mit einem eine niedrigere Temperatur aufweisenden gas- oder dampfförmigen Kühlfluid zu mischen. Dieser Vorgang, der in der Fachwelt als Quenchen bezeichnet wird, kann mit zurückgeführten kalten Produktgas, einem anderen, die gewünschte Gaszusammensetzung nicht negativ beeinflussenden Gas oder mit Wasserdampf durchgeführt werden. Dabei sind die Verfahrensbedingungen so einzustellen, daß sowohl der heiße schnelle Strömungskern als auch die kühleren wandnahen Bereiche des Rohgasstromes ausreichend gekühlt werden. Während das Erreichen des letztgenannten Zieles einen Eintritt des Kühlmediums in den Rohgaskanal verlangt, der das eintretende Kühlfluid als kühlen Schleier an der Wandung des Rohgaskanals entlangströmen läßt, ist für das erstgenannte Ziel eine möglichst starke Durchdringung und damit intensive Mischung der beiden Gasströme oder eine lange Mischstrecke nötig.

In Verfolgung dieser Aufgabe sind bereits in der Vergangenheit unterschiedliche Vorschläge unterbreitet worden, bei denen eine Zuführung des Kühlfluids in Teilströmen über im Mantel des Rohgaskanales befindliche Eintrittsöffnungen oder Ringspalte vorgesehen ist. Aus der DE-A-38 08 729 ist außerdem ein Vorschlag bekannt, bei dem ein Teil des Kühlfluids radial über den Mantel des Rohgaskanals in den Rohgasstrom eingeleitet wird, während die Zuführung des anderen Teiles des Kühlfluids über ein axial im Rohgaskanal angeordnetes Quenchrohr entgegen der Strömungsrichtung des Rohgasstromes erfolgt. Diese Arbeitsweise setzt also immer das Vorhandensein eines entsprechend angeordneten Quenchrohres im Rohgaskanal voraus. Eine derartige Konstruktion dürfte jedoch unter strömungstechnischen Gesichtspunkten nicht als völlig unproblematisch anzusehen sein.

Die EP-A-0 284 762 beschreibt ferner einen unterhalb eines Vergasungsreaktors angeordneten Quenchkühler zum Kühlen von Synthesegas, in dessen Innenraum Sprühdüsen hineinragen. über diese Sprühdüsen wird dabei Wasser in einer solchen Menge in den heißen Gasstrom eingespritzt, daß das Wasser nahezu vollständig verdampft und das Gas gleichzeitig bis auf etwa 300 bis 600°C abgekühlt wird.

Der Erfindung liegt deshalb die Aufgabe zugrunde, das Kühlverfahren der eingangs genannten Art dahingehend weiterzuentwickeln, daß sowohl die Kühlung der Randzonen als auch des Strömungskernes des Rohgasstromes optimal in einer Weise erfolgt, bei der nur eine relativ kurze Mischstrecke benötigt wird und dadurch eine geringere Bauhöhe der Vergasungsanlage mit entsprechend niedrigen Baukosten erreicht werden kann.

Das der Lösung dieser Aufgabe dienende Verfahren der eingangs genannten Art ist erfindungsgemäß dadurch gekennzeichnet, daß das Kühlfluid teilweise über Rohre, welche fluchtend in und/oder auf radialen Einbauten im Rohgaskanal angeordnet sind, eingeleitet wird, während die Zuführung des verbleibenden Teils des Kühlfluids vom Mantel des Rohgaskanals her über zwischen den radialen Einbauten und/ oder in Gasströmungsrichtung hinter denselben angeordnete Eintrittsöffnungen erfolgt, wobei die Teilströme des Kühlfluids radial zur Mittelpunktsachse des Rohgaskanales gerichtet sind.

Das heißt, zur Durchführung des erfindungsgemäßen Verfahrens ist es erforderlich, den Rohgaskanal mit radialen Einbauten zu versehen. Als Rohgaskanal im Sinne der vorliegenden Erfindung soll dabei jener Teil der Vergasungsanlage verstanden werden, der dicht oberhalb der Brennerebene des Vergasungsreaktors beginnt und sich über den gesamten daran anschließenden Reaktorschacht sowie den Strahlungskühler erstreckt. In den älteren, nicht vorveröffentlichten deutschen Patentanmeldungen DE-A 38 24 233 und DE-A 39 29 766 werden zwar Vergasungsanlagen beschrieben, bei denen der Rohgaskanal derartige radiale Einbauten (Schotten) aufweist, die mit Wasser gekühlt sind und auf ihrer Oberfläche eine Schutzschicht aus feuerfestem Material besitzen. Durch diese radialen Einbauten soll zwar die indirekte Kühlung des Rohgassstromes verbessert und damit die Bauhöhe der Vergasungsanlage reduziert werden. Die radialen Einbauten selbst weisen jedoch in diesem Falle keinerlei Einrichtungen zur Einleitung eines Kühlfluids in den Rohgasstrom auf. Die erfindungsgemäße Ausgestaltung der radialen Einbauten wird deshalb durch die beiden vorstehend genannten älteren Patentanmeldungen nicht vorweggenommen.

Bei der Durchführung des erfindungsgemäßen Verfahrens werden mindestens 40 Vol.-% des insgesamt benötigten Kühlfluids über die in oder auf den radialen Einbauten angeordneten Rohre in den Rohgasstrom eingeleitet, wobei die Menge des auf diese Weise eingeleiteten Kühlfluids in Abhängigkeit von der Rohgastemperatur oberhalb des Rohgaskanales geregelt werden kann. Durch diesen Teil des Kühlfluids wird der von außen nur schwer erreichbare, heiße und schnelle Strömungskern des Rohgasstromes gekühlt, während der andere Teil des Kühlfluids, dessen Einleitung vom Mantel des Rohgaskanales her erfolgt, das im Randbereich zwischen den radialen Einbauten strömende Gas abkühlt und dabei gleichzeitig einen Schutzschleier für den Mantel des Rohgaskanales bildet.

Die maximal über die radialen Einbauten zuführbare Kühlfluidmenge ergibt sich innerhalb des vorstehend genannten Volumenanteiles an der Gesamtmenge aus der Anzahl der radialen Einbauten, der Zahl der in oder auf diesen Einbauten angebrachten Rohre sowie deren Austrittsdurchmesser und der Strömungsgeschwindigkeit des Kühlfluids. Die Anzahl der in oder auf den radialen Einbauten angeordneten Rohre kann dabei im Bereich zwischen 1 und 10, vorzugsweise zwischen 2 und 4, liegen. Wenn in oder auf den radialen Einbauten jeweils mehrere Rohre angeordnet sind, dann wird man zweckmäßigerweise auch die entsprechende Anzahl von Rohren zwischen zwei radialen Einbauten vorsehen, die übereinander angeordnet sind, so daß die Einleitung des Kühlfluids sowohl über die radialen Einbauten als auch vom Mantel des Rohgaskanales her in mehreren Ebenen möglichst gleichmäßig über die gesamte Länge des Rohgaskanales verteilt erfolgen kann. Die Austrittsöffnungen bzw. -düsen aller Rohre sind dabei so ausgebildet, daß alle in den Rohgasstrom eintretenden Teilströme des Kühlfluids radial zur Mittelpunktsachse gerichtet sind. Außerdem können die einzelnen Teilströme des Kühlfluids hierbei in oder gegen die Strömungsrichtung des nach oben gerichteten Rohgasstromes eingeleitet werden.

Weitere Einzelheiten der Erfindung ergeben sich aus den vorliegenden Unteransprüchen und sollen nachfolgend an Hand der Abbildungen erläutert werden. Diese betreffen in schematisch vereinfachter Form die Vorrichtung zur Durchführung des erfindungsgemäßen Verfahrens. Hierbei zeigen:

Fig. 1 einen Längsschnitt durch den Rohgaskanal mit den darin befindlichen radialen Einbauten und

Fig. 2 einen Querschnitt in Höhe der Linie A-A' von Fig. 1.

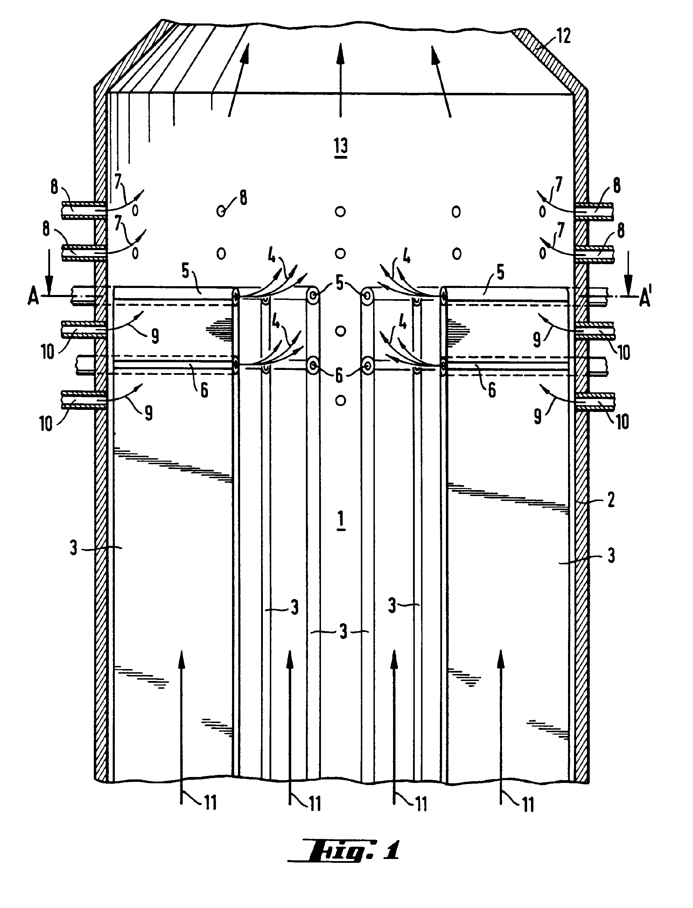

Fig. 1 zeigt nur den oberen Teil des Rohrgaskanales 1, dessen Mantel 2 den oberhalb der in der Abbildung nicht dargestellten Vergasungsbrenner befindlichen Reaktorschacht sowie den sich daran anschließenden Strahlungskühler umschließt. Das heißt, im Mantel 2 sind im oberen Bereich die in der Abbildung ebenfalls nicht dargestellten Kesselrohre des Strahlungskühlers angeordnet. Auf der Innenseite ist der Mantel 2 mit einer feuerfesten und reaktionsbeständigen Auskleidung versehen, die ebenfalls nicht dargestellt wurde. Auf die Wiedergabe dieser konstruktiven Einzelheiten bei der Ausgestaltung des Mantels 2 konnte verzichtet werden, weil diese dem stand der Technik entsprechen und auch nicht Gegenstand der vorliegenden Erfindung sind. In den Rohgaskanal 1 ragen die radialen Einbauten 3 hinein, die ebenfalls mit einer Wasserkühlung sowie auf ihrer Außenseite mit einer feuerfesten und reaktionsbeständigen Schutzschicht versehen sind. Die Breite der radialen Einbauten 3 ist dabei so bemessen, daß im mittleren Bereich des Rohgaskanales 1 noch ein ausreichend großer freier Raum vorhanden ist, in dem der Strom des heißen Partialoxidationsrohgases in Richtung der Pfeile 11 ungehindert von unten nach oben strömen kann. Oberhalb des Rohgaskanales 1 schließt sich der in der Abbildung nicht dargestellte, mit Einbauten versehene Konvektionskühler oder ein kombinierter Kühler-Wärmeastauscher an. In der Praxis ist es hierbei auch möglich, daß das Partialoxidationsrohgas vor dem Eintritt in diese Einrichtungen eine Umlenkung erfährt, so daß diese Einrichtungen vom Gas von oben nach unten durchflossen werden.

Auf den radialen Einbauten 3 sind die Rohre 5 und in den radialen Einbauten 3 die Rohre 6 angeordnet, durch die ein Teil des Kühlfluids in den Rohgaskanal 1 eingeführt wird. Wie die Pfeile 4 zeigen, vermischt sich das auf diese Weise eingeleitete Kühlfluid mit dem Strömungskern des aufsteigenden Rohgasstromes und sorgt dort für eine ausreichende Abkühlung. Die Rohre 6 sind in der Abbildung nur in einer Ebene angeordnet. In der Praxis können sie selbstverständlich in mehreren, übereinanderliegenden Ebenen angeordnet werden und sich so über die gesamte Höhe der radialen Einbauten 3 erstrecken. Vorzugsweise werden die Rohre 6 jedoch im oberen Drittel der radialen Einbauten 3 angeordnet.

Oberhalb der radialen Einbauten 3 münden in den Rohgaskanal 1 die im Mantel 2 angebrachten Rohre 8, durch die eine Teil des Kühlfluids in Richtung der Pfeile 7 austritt. Das heißt, es bildet sich in diesem Bereich eine nach oben gerichtete Mantelströmung aus. Anstelle der Rohre 8 können an dieser Stelle auch Ringspalte im Mantel 2 angeordnet sein. Ferner münden im Bereich zwischen den radialen Einbauten 3 die Rohre 10 in den Rohgaskanal 1, die ebenfalls in den Mantel 2 eingelassen sind und in mehreren Ebenen angeordnet sein können. Aus diesen Rohren 10 tritt das Kühlfluid in Richtung der Pfeile 9 aus und kühlt das zwischen den radialen Einbauten 3 nach oben strömende Rohgas.

Oberhalb der Rohre 8 befindet sich vor der Einschnürung 12 bzw. den mit Einbauten versehenen Einrichtungen (Konvektionskühler oder dergleichen) der Misch- und Beruhigungsraum 13. Erfindungsgemäß soll dieser Misch- und Beruhigungsraum 13 ein Höhe aufweisen, die dem 0,2- bis 5-fachen, vorzugsweise dem 0,2 bis 2-fachen, des Durchmessers des Rohgaskanales 1 entspricht.

Es wurde bereits weiter oben darauf hingewiesen, daß die Menge des Kühlfluids, das über die Rohre 5 und 6 eingeleitet wird, in Abhängigkeit von der Rohgastemperatur oberhalb des Rohgaskanales 1 geregelt werden kann.

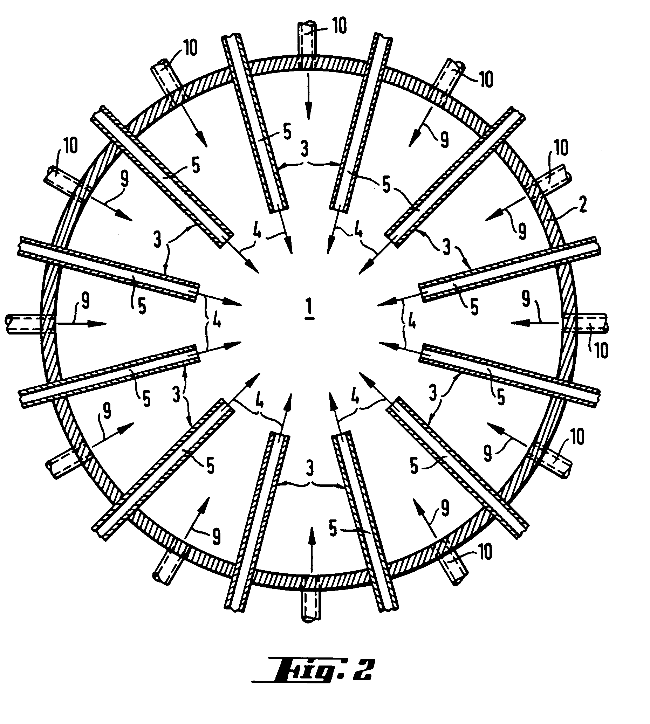

Bei der Darstellung in Fig. 2 haben die Bezugszeichen selbstverständlich die gleiche Bedeutung wie in Fig. 1, so daß es hierzu keiner weiteren Erläuterung bedarf. Fig. 2 läßt die radiale Anordnung der Einbauten 3 klar erkennen. Die Pfeile in Fig. 2 zeigen ganz eindeutig, daß alle in den Rohgaskanal 1 eintretenden Teilströme des Kühlfluids radial zur Mittelpunktachse des Rohgaskanales 1 gerichtet sind.

In Abweichung von der vorstehend beschriebenen Ausführungsform ist die Anwendbarkeit des erfindungsgemäßen Verfahrens selbstverständlich auch dann gegeben, wenn die Vergasungsanlage so ausgebildet ist, daß das zu kühlende Gas von oben in den Rohgaskanal eintritt und diesen von oben nach unten durchströmt.

**Patentansprüche**

1. Verfahren zur Kühlung von Partialoxidationsrohgas, das durch Vergasung (Partialoxidation) von feinkörnigen bis staubförmigen Brennstoffen in einem Flugstromvergaser in Gegenwart von Sauerstoff und/oder Luft sowie Wasserdampf bei Drücken bis zu 100 bar und Temperaturen oberhalb des Schlackeschmelzpunktes gewonnen wird, wobei das zu kühlende Gas mit einem gas- bzw. dampfförmigen Kühlfluid gequencht wird, dadurch gekennzeichnet, daß das Kühlfluid teilweise über Rohre, welche fluchtend in und/oder auf radialen Einbauten im Rohgaskanal angeordnet sind, eingeleitet wird, während die Zuführung des verbleibenden Teiles des Kühlfluids vom Mantel des Rohgaskanales her über zwischen den radialen Einbauten und/oder in Gasströmungsrichtung hinter denselben angeordnete Eintrittsöffnungen erfolgt, wobei die Teilströme des Kühlfluids radial zur Mittelpunktsachse des Rohgaskanales gerichtet sind.

2. Verfahren nach Anspruch 1, dadurch gekennzeichnet, daß die Einleitung der Teilströme des Kühlfluids in einer oder mehreren Ebenen erfolgt, wobei sich die Lage dieser Ebenen über die gesamte Höhe des Rohgaskanales erstrecken kann.

3. Verfahren nach den Ansprüchen 1 und 2, dadurch gekennzeichnet, daß die Menge des Kühlfluids, die über die in oder auf den radialen Einbauten angeordneten Rohre eingeleitet wird, in Abhängigkeit von der Rohgastemperatur oberhalb des Rohgaskanales geregelt wird, wobei diese Menge mindestens 40 Vol.-% des insgesamt benötigten Kühlfluids beträgt.

4. Vorrichtung zur Durchführung des Verfahrens nach den Ansprüchen 1 bis 3, dadurch gekennzeichnet, daß im Rohgaskanal (1) radiale Einbauten (3), in und/oder auf denen sich Rohre (5; 6) für die Einleitung des Kühlfluids befinden, angeordnet sind und daß außerdem in den Mantel (2) des Rohgaskanales (1) Rohre (8; 10) für die Einleitung des Kühlfluids eingelassen sind, wobei die Rohre (8) oberhalb der radialen Einbauten (3) und die Rohre (10) im Bereich zwischen den radialen Einbauten (3) in den Rohgaskanal (1) münden.

5. Vorrichtung nach Anspruch 4, dadurch gekennzeichnet, daß die Rohre (5; 6; 8; 10) in mehreren Ebenen übereinander angeordnet sind.

6. Vorrichtung nach den Ansprüchen 4 und 5, dadurch gekennzeichnet, daß die Zahl der Rohre (5; 6), die pro radialem Einbau (3) vorgesehen sind, zwischen 1 und 10, vorzugsweise zwischen 2 und 4, liegt.

7. Vorrichtung nach den Ansprüchen 4 bis 6, dadurch gekennzeichnet, daß oberhalb der Rohre (8) im Rohgaskanal (1) ein Misch- und Beruhigungsraum (13) vorgesehen ist, dessen Höhe dem 0,2- bis 5-fachen, vorzugsweise dem 0,2- bis 2-fachen, des Durchmessers des Rohgaskanales (1) entspricht.

## Claims

1. Process for cooling crude partial oxidation gas produced by gasification (partial oxidation) of fine-grained to dusty fuels in a fluid-flow gasifier in the presence of oxygen and/or air as well as steam under pressures of up to 100 bar and at temperatures above the melting point of slag, the gas to be cooled being quenched by a cooling fluid in the form of a gas or vapour, characterized in that the cooling fluid is introduced partially via tubes which are arranged in alignment in and/or on radial internals in the crude gas duct, while the remaining part of the cooling fluid is fed from the shell of the crude gas duct via inlet orifices located between the radical internals and/or downstream of the latter in the direction of gas flow, the part streams of the cooling fluid pointing radially to the centre axis of the crude gas duct.

2. Process according to Claim 1, characterized in that the part streams of cooling fluid are introduced at one or more levels, and the positions of these levels can extend over the entire height of the crude gas duct.

3. Process according to Claims 1 and 2, characterized in that the rate of the cooling fluid introduced via the tubes arranged in or on the radial internals is controlled as a function of the crude gas temperature above the crude gas duct, this rate being at least 40% by volume of the total cooling fluid required.

4. Equipment for carrying out the process according to Claims 1 to 3, characterized in that radial internals (3), in and/or on which tubes (5; 6) for introducing cooling fluid are located, are arranged in the crude gas duct (1) and that, in addition, tubes (8; 10) for introducing cooling fluid are fitted in the shell (2) of the crude gas duct (1), the tubes (8) leading above the radial internals (3) in the crude gas duct (1) and the tubes (10) leading in the region between the radial internals (3) into the crude gas duct (1).

5. Equipment according to Claim 4, characterized in that the tubes (5; 6; 8; 10) are arranged at several levels above one another.

6. Equipment according to Claims 4 and 5, characterized in that the number of tubes (5; 6) provided per radial internal (3) is between 1 and 10, preferably between 2 and 4.

7. Equipment according to Claims 4 to 6, characterized in that a mixing and settling space (13), the height of which corresponds to 0.2 to five times, preferably 0.2 times to twice, the diameter of the crude gas duct (1), is provided above the tubes (8) in the crude gas duct (1).

## Revendications

1. Procédé pour le refroidissement de gaz brut d'oxydation partielle qui est obtenu par gazéification (oxydation partielle) de combustibles allant des grains fins aux poussières dans un gazéificateur à flux en présence d'oxygène et/ou d'air, ainsi que de vapeur d'eau, sous des pressions allant jusqu'à 100 bars et à des températures supérieures au point de fusion des scories, le gaz à refroidir étant soumis à un refroidissement brusque par un fluide de refroidissement gazeux ou à l'état de vapeur, caractérisé en ce que le fluide de refroidissement est admis partiellement par des tubes qui sont installés alignés dans et/ou sur des chicanes radiales dans le conduit de gaz brut, tandis que l'alimentation de la partie restante du fluide de refroidissement s'effectue à partir de l'enveloppe du conduit de gaz brut par l'intermédiaire d'orifices d'entrée installés entre les chicanes radiales et/ou, dans le sens d'écoulement du gaz, en aval de celles-ci, les courants partiels du fluide de refroidissement étant orientés radialement vers l'axe central du conduit de gaz brut.

2. Procédé suivant la revendication 1, caractérisé en ce que l'admission des courants partiels du fluide de refroidissement s'effectue dans un ou plusieurs plans, la position de ces plans pouvant s'étendre sur la totalité de la hauteur du conduit de gaz brut.

3. Procédé suivant les revendications 1 et 2, caractérisé en ce que la quantité du fluide de refroidissement qui est admise par l'intermédiaire des tubes installés dans ou sur les chicanes radiales est réglée en fonction de la température du gaz brut au-dessus du conduit de gaz brut, cette quantité s'élevant au moins à 40 % en volume de la totalité du fluide de refroidissement nécessaire.

4. Dispositif pour l'exécution du procédé suivant les revendications 1 à 3, caractérisé en ce que, dans le conduit de gaz brut (1) sont installées des chicanes radiales (3) dans et/ou sur lesquelles sont prévus des tubes (5; 6) pour l'admission du fluide de refroidissement et, qu'en outre, dans l'enveloppe (2) du conduit de gaz de refroidissement (1), sont fichés des tubes (8; 10) pour l'admission du fluide de refroidissement, les tubes (8) s'ouvrant dans le conduit de gaz brut (1) au-dessus des chicanes radiales (3) et les tubes (10) s'ouvrant dans la zone comprise entre les chicanes radiales (3).

5. Dispositif suivant la revendication 4, caractérisé en ce que les tubes (5; 6; 8; 10) sont installés dans plusieurs plans superposés.

6. Dispositif suivant les revendications 4 et 5, caractérisé en ce que le nombre des tubes (5; 6) qui sont prévus par chicane radiale (3) est compris entre 1 et 10, de préférence entre 2 et 4.

7. Dispositif suivant les revendications 4 à 6, caractérisé en ce qu'au-dessus des tubes (8) est prévue dans le conduit de gaz brut (1), une chambre de mélange et de stabilisation (13) dont la hauteur correspond à 0,2 à 5 fois, de préférence 0,2 à 2 fois, le diamètre du conduit de gaz brut (1).

**Fig. 1**

Fig. 2